(19) Europäisches Patentamt
European Patent Office
Office européen des brevets

(11) **EP 2 537 557 B1**

(12) **EUROPEAN PATENT SPECIFICATION**

(45) Date of publication and mention
of the grant of the patent:
**15.12.2021 Bulletin 2021/50**

(51) Int Cl.:
*A62B 7/02* *(2006.01)*        *A62B 7/14* *(2006.01)*
*A62B 27/00* *(2006.01)*       *B64D 10/00* *(2006.01)*
*B64D 13/00* *(2006.01)*

(21) Application number: **12172546.9**

(22) Date of filing: **19.06.2012**

(54) **Method and system for detecting the performance of a crew oxygen system**

Verfahren und System zur Erkennung der Leistung eines Crew-Sauerstoffsystems

Procédé et système de détection de la performance d'un circuit oxygène équipage

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.06.2011 CN 201110165219**

(43) Date of publication of application:
**26.12.2012 Bulletin 2012/52**

(73) Proprietor: **Air China Limited
Beijing (CN)**

(72) Inventors:
• **Gu, Zhuping**
  **311207 Hangzhou (CN)**
• **Ding, Huifeng**
  **311207 Hangzhou (CN)**

• **Huang, Lei**
  **311207 Hangzhou (CN)**
• **Wang, Jianjiang**
  **311207 Hangzhou (CN)**
• **Xie, Zhenqiang**
  **311207 Hangzhou (CN)**
• **Zhu, Yi**
  **311207 Hangzhou (CN)**
• **Wang, Rong**
  **311207 Hangzhou (CN)**

(74) Representative: **Grünecker Patent- und
Rechtsanwälte
PartG mbB
Leopoldstraße 4
80802 München (DE)**

(56) References cited:
**WO-A1-2009/068058     US-A- 5 159 839**

**Description**

TECHNICAL FIELD OF THE INVENTION

The present invention relates to a method and a system for detecting the operation conditions of equipments of an aircraft, in particular to a method and a system for detecting the performance of a crew oxygen system.

BACKGROUND

US 5,159,839 A1 describes an apparatus for gauging high pressure gas in particular for the supply of oxygen gas on board an aircraft, the apparatus being associated with a gas tank or with a plurality of gas tanks having their outlets interconnected, wherein each individual tank is provided both with a pressure regulator connected to a common outlet duct, and with a pressure sensor producing a signal proportional to the pressure in the, or each, tank, with the or each, pressure sensor being connected to a calculation and storage unit suitable for determining the content of each individual tank on the basis of the signal associated therewith and taking account of the coefficient of compressibility of the gas contained in each individual tank on the basis of data stored in the storage unit for different values of pressure, and consequently deducing the overall available content, the calculation unit further including a readout for displaying the overall available content.

A modern aircraft generally flies at a height between 7000-15000 meters. At such height, the oxygen content in the air is very low and the oxygen partial pressure always is only about 10kpa (kilopascals), which is not sufficient to maintain normal breath. Generally, air is pressurized and then pressed into a cabin by an engine to provide oxygen. However, in special conditions, such as loss of cabin pressure and like, the aircraft must provide additional oxygen to crew members and passengers for breathing.

In an aircraft, there are two independent oxygen systems, i.e., a crew oxygen system and a passenger oxygen system. The crew oxygen system uses hyperbaric oxygen stored in an oxygen cylinder in the aircraft. The hyperbaric oxygen is decompressed and diluted, and then is specially provided to crew members in the control cabin. The passenger oxygen system provides oxygen, which is obtained through chemical reaction, to passengers and crew members in the passenger cabin.

The crew oxygen system is very important to ensure safety of flight of the aircraft. In the conventional method for detecting performance of crew oxygen system, the pressure of the crew oxygen system is recorded through artificial way, and the oxygen cylinder is replaced when the pressure of the crew oxygen system is lower than a certain threshold. Or the aircraft system is configured to give an alarm to indicate the oxygen cylinder needs to be replaced, when the pressure of the crew oxygen system is lower than a certain threshold.

However, all of the above methods can increase the costs of operation for airlines. The more important thing is, if there is only slight leakage existing in the crew oxygen system, all of the above methods cannot help recognize the leakage in time and thus the problem cannot be eliminated in time. Under this situation, the troubleshooting and maintenance of the crew oxygen system always are post-processing, so that the safety of flight cannot be guaranteed. Moreover, the troubleshooting of the leakage of the crew oxygen system is a time-consuming process, which can cause airline delays even grounding.

SUMMARY

For one or more technical problem of the conventional technology, one aspect of the invention provides a method for detecting the performance of a crew oxygen system, comprising: obtaining an oxygen pressure in an oxygen cylinder of the crew oxygen system, a temperature outside an airplane and a cockpit temperature; generating crew oxygen messages from the obtained oxygen pressure in the oxygen cylinder of the crew oxygen system, the temperature outside the airplane and the cockpit temperature; receiving the crew oxygen messages, and determining an oxygen pressure in the oxygen cylinder under standard temperature; and determining performance of the crew oxygen system.

According to another aspect of the invention there is provided a system for detecting the performance of a crew oxygen system, comprising: a crew oxygen pressure data obtaining device; a crew oxygen messages generating device configured to generate crew oxygen messages according to an oxygen pressure in a oxygen cylinder of the crew oxygen system obtained by the crew oxygen pressure data obtaining device, an temperature outside an airplane and a cockpit temperature, wherein the crew oxygen messages are transmitted through a crew oxygen messages transmitting device; and a crew oxygen pressure data processing device configured to receive the crew oxygen messages, determine an oxygen pressure of the oxygen cylinder under standard temperature, and determine performance of the crew oxygen system accordingly.

Preferably, the crew oxygen pressure data obtaining device comprises a pressure sensor configured to measure an oxygen pressure of an oxygen cylinder of the crew oxygen system; the crew oxygen message generating device comprises a DMU of AIDS of ACMS or a part thereof configured to obtain the oxygen pressure of the oxygen cylinder of the crew oxygen system, the temperature outside an airplane and the cockpit temperature, and generate crew oxygen messages, wherein the crew oxygen messages are transmitted through the ACARS; and the crew oxygen pressure data processing device comprises a server configured to receive the crew oxygen messages from the ACARS, determine an oxygen pressure of the oxygen cylinder under standard temperature, and determine performance of the crew oxygen system accordingly.

The method for maintenance of a crew oxygen system may comprise: determining an oxygen pressure of the oxygen cylinder under standard temperature; and arranging maintenance for the crew oxygen system in respond to degradation of the crew oxygen system.

BRIEF DESCRIPTION OF THE DRAWINGS

Hereinafter, some preferred embodiments of the invention will be described in reference to the accompanying drawings.

Fig. 1 is a schematic illustrating a structure of the aircraft crew oxygen system according to one embodiment of the present invention.

Fig. 2 is a schematic illustrating a branch structure of the aircraft crew oxygen system according to one embodiment of the present invention.

Fig. 3 is a schematic illustrating a circuit structure of a pressure sensor according to one embodiment of the present invention.

Fig. 4 is a schematic illustrating a system for detecting the performance of the crew oxygen system according to one embodiment of the present invention.

Fig. 5 is a flow chart illustrating a process of generating a crew oxygen message according to one embodiment of the present invention.

Fig. 6 is a schematic illustrating a system for detecting the performance of the crew oxygen system according to an example of one embodiment of the present invention.

Fig. 7 is a schematic illustrating a performance curve of the crew oxygen system.

Fig. 8 is a flow chart illustrating a method for detecting the performance of the crew oxygen system according to one embodiment of the present invention.

Fig. 9 is a schematic illustrating the relationship between the oxygen pressure in the oxygen cylinder in standard state and measuring time according to one embodiment of the present invention.

Fig. 10 is a schematic illustrating the relationship between the oxygen pressure in the oxygen cylinder in standard state and measuring time according to one embodiment of the present invention.

Fig. 11 is a schematic illustrating the relationship between a 24-hour 3-days rolling average leakage rate and measuring time of oxygen in the oxygen cylinder of the crew oxygen system according to the embodiment shown in Fig. 10.

Fig. 12 is a flow chart illustrating a method for maintenance of the aircraft crew oxygen system according to one embodiment of the present invention.

DETAILED DESCRIPTION

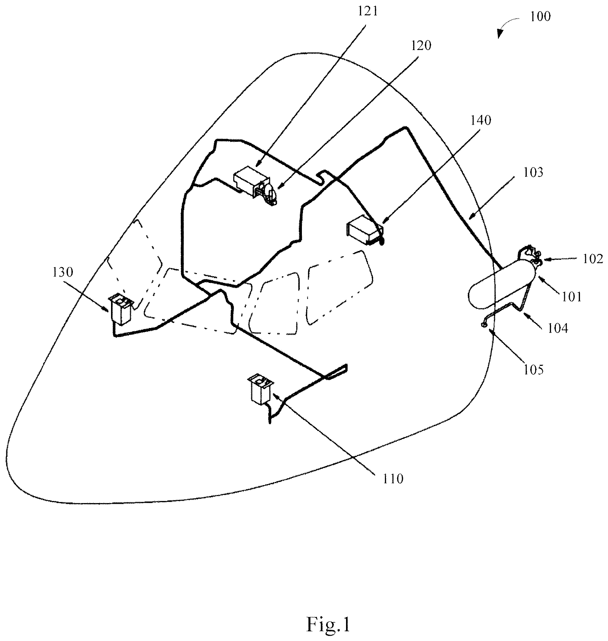

Fig. 1 is a schematic illustrating a structure of the aircraft crew oxygen system according to one embodiment of the present invention. As shown in fig. 1, the crew oxygen system 100 includes an oxygen cylinder 101 (storing hyperbaric oxygen inside), a decompression regulator 102 and an oxygen pipeline 103. The oxygen cylinder 101 is connected to the decompression regulator 102. Hyperbaric oxygen is transformed into hypobaric oxygen through the decompression regulator 102. The hypobaric oxygen is supplied to a driver mask 110, a copilot mask 130, an observer mask 120 and a second observer mask 140 via the oxygen pipeline 103. In the figure, the driver mask 110, the copilot mask 130 and the second observer mask 140 also show their respective storage boxes for storing an oxygen mask (the oxygen mask is placed in the storage box); while the observer mask in the figure shows separate observer mask 120 and a storage box 121 for storing the observer mask. The oxygen cylinder 101 is further connected to a fragile disc 105 via a release tube 104. When the pressure in the oxygen cylinder is too high, the fragile disc 105 breaks so that the oxygen will flow out of the cabin.

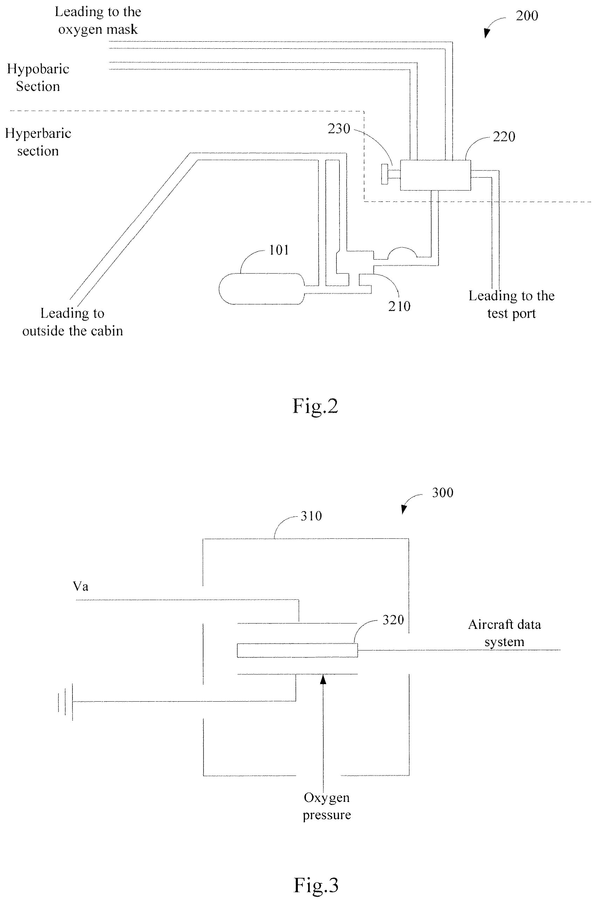

Fig. 2 is a schematic illustrating a branch structure of the aircraft crew oxygen system according to one embodiment of the present invention. As shown in fig. 2, the whole branch of the crew oxygen system can be divided into hyperbaric section and hypobaric section. The hyperbaric oxygen stored in the oxygen cylinder 101 passes through a splitter 210, one branch of which is connected to the release tube, and to outside of the cabin via the fragile disc so as to prevent overpressure, and another branch of which is connected to a decompression splitter 220. Unlike the decompression regulator shown in fig. 1, the decompression splitter 220 has both decompression and splitting functions. After decompressing and splitting, two branches are connected to the oxygen pipeline and respectively supply oxygen to the oxygen masks of crew members; while another branch is connected to a test port to perform the test.

According to one embodiment of the present invention, the decompression regulator or the decompression splitter is provided with a pressure sensor, such as a pressure sensor 230, for measuring the oxygen pressure in the oxygen cylinder. According to one embodiment of the present invention, the pressure sensor 230 can be installed on one branch of the splitter 210 or one branch of the oxygen cylinder. In a word, the pressure sensor 230 can be installed in any position of the hyperbaric section to measure the oxygen pressure in the oxygen cylinder.

Fig. 3 is a schematic illustrating a circuit structure of a pressure sensor according to one embodiment of the present invention. As shown, the pressure sensor 300 includes a casing 310 for protecting internal circuit structure. According to one embodiment of the present invention, the pressure sensor 300 is a piezoelectric crystal sensor including a piezoelectric crystal 320 connected between a power supply Va and a ground. The oxygen pressure is applied on the piezoelectric crystal. The oxygen pressure is transformed into electrical signals by the piezoelectric crystal. The electrical signals indicating the oxygen pressure is transmitted to an aircraft data system. Different aircrafts have different aircraft data systems, such as Aircraft Condition Monitoring System (ACMS) of Airbus or Aircraft Heath Monitor (AHM) of Boeing.

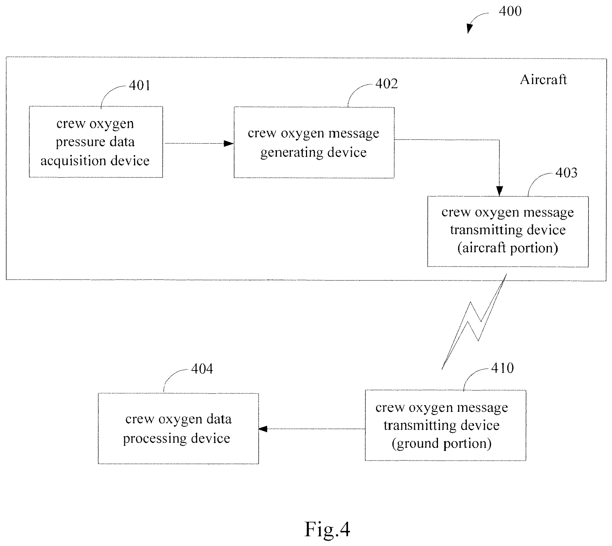

Fig. 4 is a schematic illustrating a system for detecting the performance of the crew oxygen system according to one embodiment of the present invention. As shown in the figure, the system for detecting the performance of the crew oxygen includes a crew oxygen pressure data acquisition device 401, a crew oxygen message generating device 402, a crew oxygen message transmitting device 403 and a crew oxygen data processing device 404.

The crew oxygen pressure data acquisition device 401 is configured to obtain the oxygen pressure data in the oxygen cylinder of the crew oxygen system. The aircraft crew oxygen system and the pressure sensor thereof in the embodiments shown in figs. 1-3 can be applied in crew oxygen pressure data acquisition device 401 in the present embodiment so as to obtain the required oxygen pressure data. The crew oxygen pressure data acquisition device 401 also can obtain the oxygen pressure data in the oxygen cylinder in other ways. Since the crew oxygen is important for safety of flight, almost every aircraft can automatically obtain the crew oxygen pressure data. That is, every existing aircraft is provided with respective crew oxygen pressure data acquisition device. According to another embodiment of the present invention, the crew oxygen pressure data acquisition device 401 can be any type of crew oxygen pressure data acquisition device.

As the aircraft system is more and more complex, the aircraft data system has been greatly developed. For example, the ACMS of Airbus and AHM of Boeing. In addition, the centralized fault display system (CFDS) also has been greatly developed. Such systems have a characteristic, i.e., they can automatically generate messages including specific data according to data monitored in real time when specific trigger condition is satisfied. The crew oxygen message generating device 402 in the embodiment can be such system or a part of such system.

Taking the ACMS of Airbus as an example (the AHM of Boeing can be comparable with the ACMS of Airbus), the ACMS includes an aircraft integrated data system (AIDS). The core of the AIDS is a data management unit (DMU). The DMU has the following two important functions:

- collecting, processing and recording many parameters in the aircraft, including data from the black box. These parameters are stored in an internal storage memory of the DMU or an external recorder, such as a digital AIDS recorder (DAR);
- generating system messages, and triggering the messages when the trigger condition is satisfied by the aircraft state or system parameters. These messages are stored a nonvolatile storage memory in the DMU.

According to one embodiment of the present invention, the crew oxygen message generating device 402 is the DMU or a part of the DMU. The crew oxygen message generating device 402 obtains the oxygen pressure data in the oxygen cylinder from the crew oxygen pressure data acquisition device 401.

Since the oxygen pressure in the oxygen cylinder of the crew oxygen system is related to the temperature, the oxygen pressure and the temperature in the oxygen cylinder must be obtained simultaneously. However, a temperature sensor generally is not provided in the oxygen system. Therefore, the temperature in the oxygen cylinder need to be calculated based on other temperature which can be measured. According to one embodiment of the present invention, a temperature sensor for measuring the oxygen temperature can be provided into the crew oxygen system.

In consideration of the position of the oxygen cylinder in the crew oxygen system, according to one embodiment of the present invention, the following formula can be used to obtain the oxygen temperature in the oxygen cylinder:

$$T = \frac{k_1 Tat + k_2 Tc}{2} \qquad (1)$$

where, Tat is the ambient air temperature or the temperature outside the airplane, Tc is the cockpit temperature, $k_1$ and $k_2$ are adjustment parameters and $k_1 + k_2 = 2$. According to one embodiment of the present invention, $k_1 > k_2$. That is, the oxygen temperature T is related to the ambient air temperature Tat and the cockpit temperature Tc, and the ambient air temperature has greater influence (is more relevant). Certainly, other mean value formulas also can be used to calculate the oxygen temperature.

According to one embodiment of the present invention, $k_1 = k_2$. That is, the formula (1) can be changed to:

$$T = k \frac{Tat + Tc}{2} \qquad (2)$$

where, k is the adjustment parameter. According to one example of the present invention, k is close to 1. Each of k, $k_1$ and $k_2$ can be obtained through measurement or statistical analysis.

According to one embodiment of the present invention, k = 1. Then formula (2) can be changed to:

$$T = \frac{Tat + Tc}{2} \qquad (3)$$

The oxygen temperature obtained based on the formula (3), which may be less precise than those calculated from the formula (1) and the formula (2), is enough for the system for detecting the performance of the crew oxygen system in this embodiments of the present invention.

As described above, the aircraft data system, such as the ACMS of Airbus or the AHM of Boeing, can automatically obtain many flight parameters. Theses parameters include the ambient air temperature Tat and the cockpit temperature Tc. When the trigger condition is satisfied, and when the oxygen pressure data in the oxygen cylinder of the crew oxygen system is obtained, the ambient air temperature or the temperature Tat outside the airplane and the cockpit temperature Tc at present are obtained simultaneously, so as to generate crew oxygen messages.

The crew oxygen messages are transmitted to the crew oxygen data processing device 404 through the crew oxygen message transmitting device in real time or at certain timing. According to one embodiment of the present invention, the crew oxygen message transmitting device includes an aircraft portion 403 and a ground portion 410, for performing communication from the aircraft to the ground. One example of the crew oxygen message transmitting device is an aircraft communication addressing and reporting system (ACARS). The ACARS is a digital data link system for transmitting messages (i.e., short messages) between the aircraft and the ground station through radio or a satellite, and offers services to the air-ground or ground-ground heavy data communication of the airline, so that all kinds of information can be exchanged.

The ACARS is comprised of an avionics computer called ACARS managing unit (MU), and a control display unit (CDU). The MU is used for sending and receiving VHF radio digital messages to and from the ground. On the ground, the ACARS is comprised of a network including the ground station 410 having a radio transceiver, which can receive or send messages (data link messages). These ground stations generally are owned by service providers, and distribute received messages to respective servers of different airlines on the network.

On the one hand, the ACARS can make the flying aircraft automatically provide real-time data such as flight dynamics, engine parameters and like to the ground station of the airline without crew members' intervention, meanwhile, also transmit other information to the ground station, so that the operating control center of the airline can obtain real-time, uninterrupted, and a great deal of flight data and relevant information on an application system thereof and master their own aircraft's dynamic, monitor the aircraft in real time, meet requirements of relevant departments such as a flight operations department, a operations department, a maintenance department and like. On the other hand, the ground station can provide multiple services to the flying aircraft, such as meteorological information, airway information, troubleshooting measures for air emergency fault and like, so as to enhance the guaranteed ability of safety of aircraft and the service level to passengers. In the case, i.e., normal VHF ground-air communication channel is increasingly burdened, the amount of information transmitted by it is low and speed is slow, such bi-directional data communication system can obviously improve and enhance guaranteed ability of the communication between the ground and the aircraft flying in the air.

According to one embodiment of the present invention, the crew oxygen message transmitting device also can be a communication device or system based on the Aviation Telecommunication Network (ATN).

According to one embodiment of the present invention, the crew oxygen message transmitting device also can be a solid state memory device. The crew oxygen messages are stored in the solid state memory device. The transmission of crew oxygen messages can be performed through the transmission of the solid state memory device.

The crew oxygen data processing device 404 receives crew oxygen messages from the crew oxygen message transmitting device 403. According to one embodiment of the present invention, the crew oxygen data processing device 404 can be a server of a certain airline. According to one embodiment of the present invention, the server receives crew oxygen messages from a certain aircraft through ACARS or ATN.

The crew oxygen data processing device 404 decodes messages through a device such as an ACARS message decoder so as to obtain data and store the obtained data in the server.

For improving the accuracy of the method for detecting the performance of the crew oxygen system of the present invention, more accurate oxygen pressure in the oxygen cylinder of the crew oxygen system, ambient air temperature and cockpit temperature should be obtained, so as to generate more accurate crew oxygen messages.

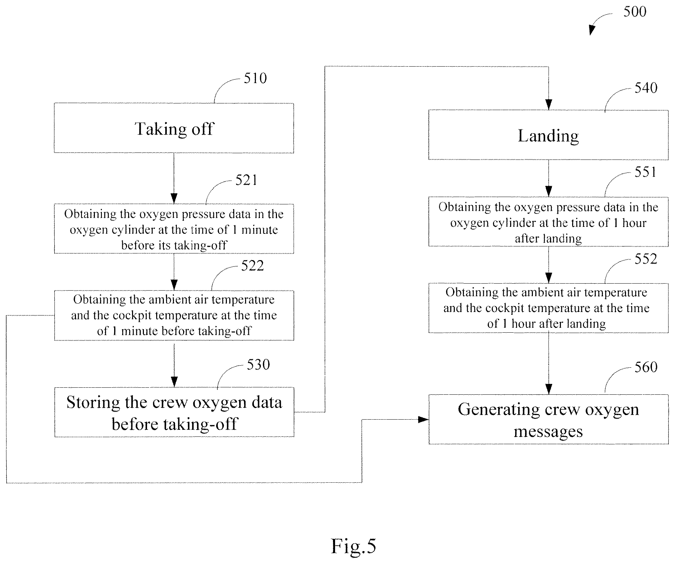

Fig. 5 is a flow chart illustrating a process of generating a crew oxygen message according to one embodiment of the present invention. In the method 500 of generating a crew oxygen message shown in fig. 5, at step 510, the aircraft takes off. When the aircraft takes off or after it takes off, at step 521, the oxygen pressure data in the oxygen cylinder at the time of 1 minute before its taking-off is obtained. At step 522, the ambient air temperature and the cockpit temperature at the time of 1 minute before taking-off are obtained. Though steps 521 and 522 are separately described, they can be performed simultaneously and become one step, or the step 522 is performed before the step 521 is performed. This also applies to the following steps of acquisition.

The operation data of aircraft including the oxygen pressure data in the oxygen cylinder in the crew oxygen system, the ambient air temperature and the cockpit temperature, can be measured in real time and stored in data caches. When the trigger condition, which is set to be the taking-off of the airplane, it is entirely possible to obtain relevant data of 1 minute before taking-off from data caches. According to one embodiment of the present invention, other trigger conditions, such as a timer, may be used to directly obtain data of 1 minute before taking-off, including the oxygen pressure data in the oxygen cylinder in the crew oxygen system, the ambient air temperature and the cockpit temperature.

According to one embodiment of the present invention, at steps 521 and 522, after the data at the time of 1 minute before taking-off is obtained, the oxygen pressure data, the ambient air temperature and the cockpit temperature at the time of 30 seconds before taking-off are obtained, and then the oxygen pressure data, the ambient air temperature and the cockpit temperature at the time of taking-off are obtained again. That is, three sets of data, i.e., the crew oxygen pressure data, the ambient air temperature and the cockpit temperature at the time of 1 minute before taking-off, at the time of 30 seconds before taking-off and at the time of taking-off, are respectively obtained. The mean value or the median of the data measured 3 times serves as the data for generating the crew oxygen messages. The crew oxygen messages generated in such way are more accurate.

According to one embodiment of the present invention, crew oxygen messages can be directly generated according to the obtained oxygen pressure data, the ambient air temperature and the cockpit temperature before taking-off (or at the time of taking-off). Proceeding to step 560 after step 522 to generate the crew oxygen messages.

The crew oxygen messages can be generated according to combination of the crew oxygen pressure data and temperature data obtained before taking-off (or at the time of taking-off) and the data obtained after landing. Or uncompleted messages can be generated when the crew oxygen pressure data and temperature data before taking-off are obtained, and then can be stored in a memory; uncompleted messages are completed when the crew oxygen pressure data and temperature data after taking-off are obtained.

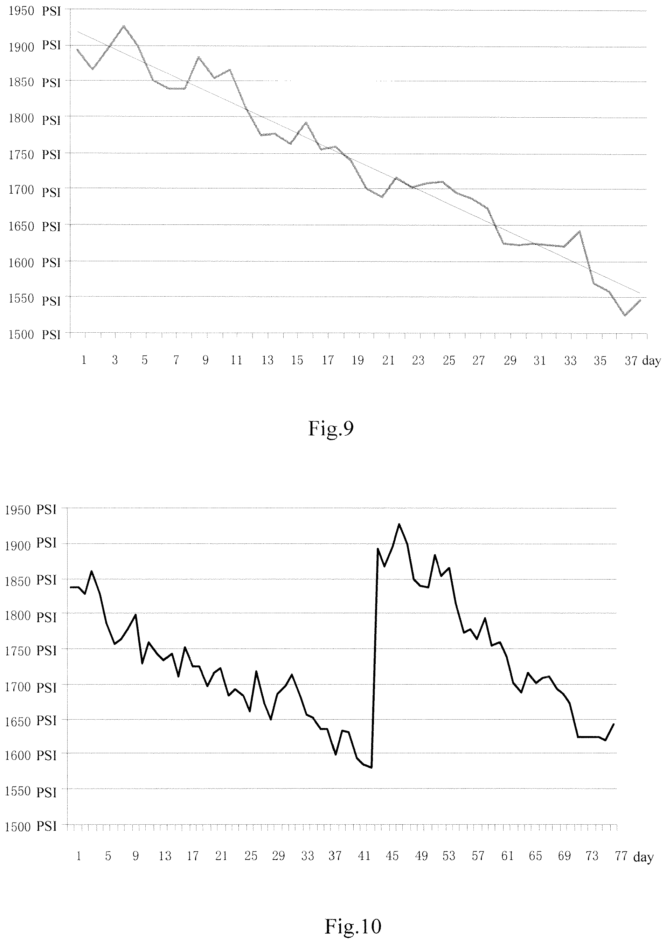

As shown by the example in fig. 10, at step 530, the obtained oxygen pressure data, the ambient air temperature and the cockpit temperature before taking-off (or at the time of taking-off) or the uncompleted messages including such data are stored in the memory in the air data system. At step 540, the aircraft lands. At step 551, the oxygen pressure data in the oxygen cylinder at the time of 1 hour after landing is obtained; at step 552, the ambient air temperature and the cockpit temperature at the time of 1 hour after landing is obtained. As to steps 551 and 552, time after landing is trigger condition for obtaining above data. At step 560, the obtained data before taking-off (or when taking-off) is combined with the obtained data after landing to generate complete crew oxygen messages.

According to one embodiment of the present invention, after the data, i.e., oxygen pressure data, the ambient air temperature and the cockpit temperature at the time of 1 hour after landing are obtained, the crew oxygen pressure data, the ambient air temperature and the cockpit temperature at the time of 1 hour and 30 seconds after landing are obtained, and then the crew oxygen pressure data, the ambient air temperature and the cockpit temperature at the time of 1 hour and 60 seconds after landing are obtained. That is, three sets of data, i.e., the crew oxygen pressure data, the ambient air temperature and the cockpit temperature at the time of 1 hour, at the time of 1 hour and 30 seconds and at the time of 1 hour and 60 seconds after landing, are respectively obtained. The mean value or the median of data measured 3 times serves as the data for generating the crew oxygen messages. As to steps 551 and 552, if it can be ensured that the temperature of the aircraft is identical with the ambient temperature and the effect of flight is eliminated, other time can be selected to obtain the crew oxygen pressure data and temperature data.

According to one embodiment of the present invention, if the aircraft takes off again within less than 1 hour after landing, the oxygen pressure data, the ambient air temperature and the cockpit temperature before re-taking-off (or at the time of the re-taking-off) are obtained, to replace the data at the time of 1 hour after landing. Certainly, multiple measurements and adoption of mean value or the median also can be applied.

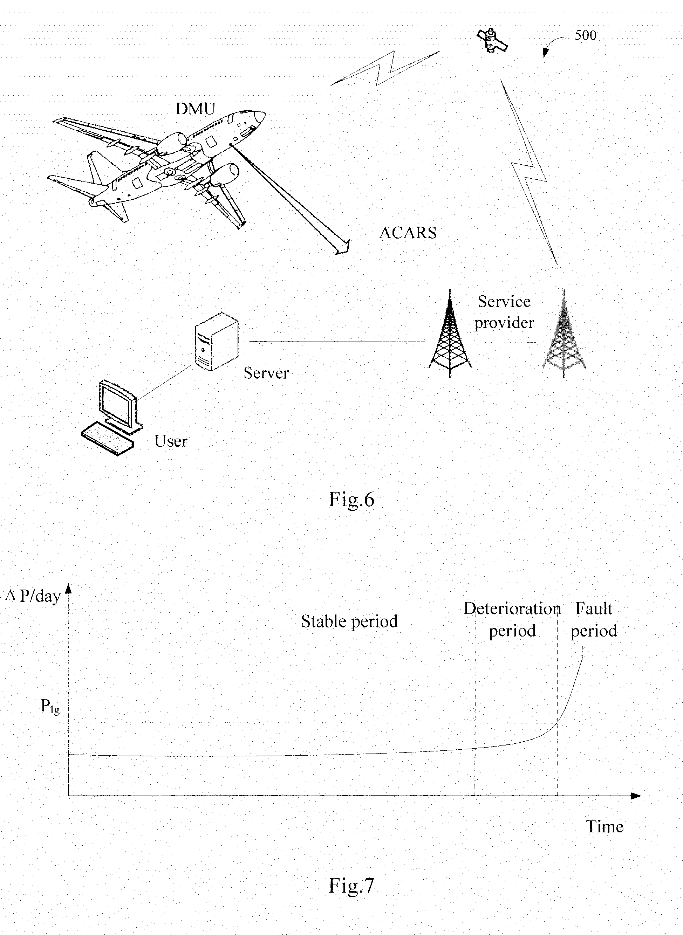

Fig. 6 is a schematic illustrating a system for detecting the performance of the crew oxygen system according to an example of one embodiment of the present invention. As shown in fig.6, the system for detecting the performance of the crew oxygen includes the DMU onboard. The DMU obtains the crew oxygen pressure data, the ambient air temperature and the cockpit temperature before taking-off (during taking-off) and after landing, and generates the crew oxygen messages. The DMU transmits the crew oxygen messages to the manage unit (MU) onboard of ACARS. The MU directly transmits the crew oxygen messages to the service provider in the ground station of ACARS through VHF radio; or, communicates with the satellite and then the crew oxygen messages are transmitted to the service provider in the ground station by the satellite. The ground service provider transmits the received crew oxygen messages to the server of corresponding airline. The crew oxygen data included in crew oxygen messages is processed by the server. A user can check the status of crew oxygen through logging into the server, so as to determine performance of crew oxygen.

Through the system for detecting the performance of crew oxygen described in the present invention, it is realized that the performance of the crew oxygen onboard can be automatically detected, so as to avoid cost of artificial record and potential mistakes or omittance caused by artificial record.

Fig. 7 is a schematic illustrating a performance curve of the crew oxygen system. Every oxygen system has a certain level of gas leakage, therefore, when the temperature is fixed, pressure difference $\Delta P$ will be produced at different time. The gas leakage rate can be represented as $P_L = \Delta P/t$. When the gas leakage rate is stable, the performance of the crew oxygen system is in stable period; when the gas leakage ratio $P_L$ gradually increases, the performance of the crew oxygen system enters deterioration period; when the gas leakage ratio $P_L$ is larger than a threshold $P_Lg$, the performance of the crew oxygen system enters failure period, failure may happen, which can influence safety of flight and easily causes unscheduled maintenance, and thus result in delay of aircraft and being grounded. In present technology, there is no any means to detect if the crew oxygen system enters deterioration period. However, according to one embodiment of the present invention, this detection is possible.

The detection of deterioration period has the following advantages: firstly, when the crew oxygen system enters deterioration period, the probability of failure is low. Therefore, safety of flight will be guaranteed if the aircraft is maintained at this time; secondly, when it is determined the crew oxygen system enters failure period, the airline can timely arrange maintenance for the aircraft, so as to avoid unscheduled maintenance, reduce the delay of the aircraft and the waste of cost of maintenance caused by replacement of oxygen cylinder according to time limit or during maintenance. Certainly, embodiments of the present invention also can be applied to detect the failure period.

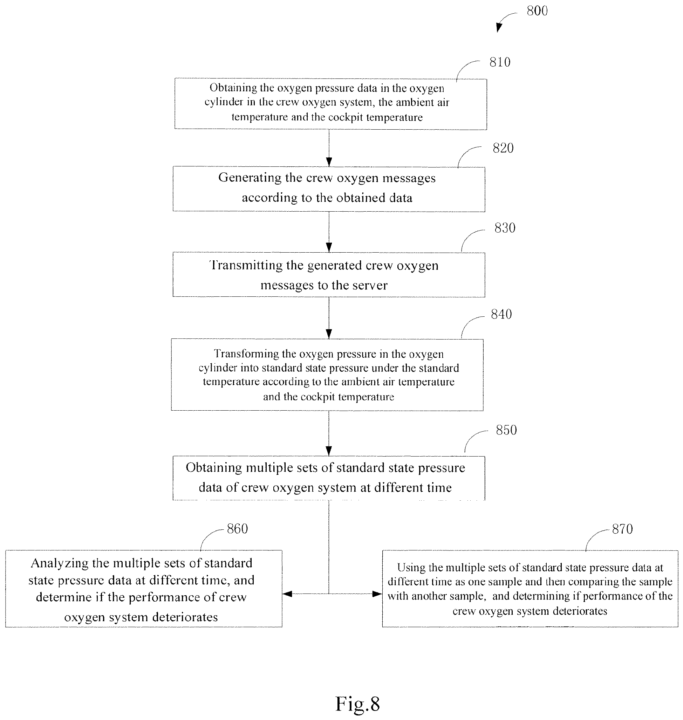

Fig. 8 is a flow chart illustrating a method for detecting the performance of the crew oxygen system according to one embodiment of the present invention. In the method 800 for detecting the performance of the crew oxygen system as shown in fig. 8, at step 810, the oxygen pressure data in the oxygen cylinder in the crew oxygen system, the ambient air temperature and the cockpit temperature are obtained. At step 820, crew oxygen messages are generated according to obtained oxygen pressure data in the oxygen cylinder in the crew oxygen system, the ambient air temperature and the cockpit temperature. At step 830, the generated crew oxygen messages are transmitted to the server for processing crew oxygen messages. At step 840, the oxygen pressure data in the oxygen cylinder in the crew oxygen system is transformed into standard state pressure under the standard temperature by the server according to the ambient air temperature and the cockpit temperature. The standard temperature can be 20°C. Certainly, the standard temperature also can be other temperature.

After the oxygen temperature is obtained, the crew oxygen pressure measured under different temperatures can be transformed into the standard state pressure under the standard temperature, so as to make a comparison and calculate the leakage rate. The standard state pressure can be calculated by the following formula:

$$P_s = \frac{T}{T_s} P \qquad (4)$$

where, $P_s$ is the standard state pressure, $T_s$ is the standard temperature, P is the obtained oxygen pressure through measurement, T is the oxygen temperature when measuring. The standard temperature can be 20°C. Certainly, the standard temperature also can be other temperature.

As shown in fig. 8, at step 850, multiple sets of standard state pressure data of crew oxygen system at different time are obtained in the way of steps 810-840. After multiple sets of standard state pressure data of the oxygen of the crew oxygen system at different time are obtained, the performance of the crew oxygen system can be determined by processing and evaluating the obtained data.

At step 860, the multiple sets of standard state pressure data at different time are analyzed, so as to determine if the performance of crew oxygen system deteriorates. Or, at step 870, the multiple sets of standard state pressure data at different time serve as one sample and then the sample is compared with another sample of another set of standard state pressure data of the same type of aircraft, so as to determine if performance of the crew oxygen system deteriorates.

According to one embodiment of the present invention, the leg leakage rate is used to determine if performance of the crew oxygen system deteriorates. The leg leakage rate of the crew oxygen system can be calculated by the following formula:

$$P_L = \frac{\Delta P_s}{t} = \frac{P_{s1} - P_{s2}}{t_2 - t_1} \qquad (5)$$

where, $t_1$ is take-off time, $t_2$ is landing time, $P_{s1}$ is standard state pressure of the crew oxygen system when aircraft takes-off, $P_{s2}$ is standard state pressure of the crew oxygen system after landing. Therefore, performance of the crew oxygen system can be determined according to the difference $\Delta P_s$ between the standard state pressure of the crew oxygen system before taking-off and that after landing. For example, if the value of $\Delta P_s = P_{s1} - P_{s2}$ is larger than 100 PSI, it means that the performance of the crew oxygen system deteriorates.

Performance of the crew oxygen system also can be determined according to the leg leakage rate. For example,

$$P_L = \frac{\Delta P_s}{t} = \frac{P_{s1} - P_{s2}}{t_2 - t_1}$$

if the leg leakage rate is larger that 48 PSI/day, it means the performance of the crew oxygen system deteriorates.

The pressure of the crew oxygen system under a certain temperature can be evaluated according to the calculated leg leakage rate. This can obviously reduce such case, i.e., unscheduled replacement of oxygen cylinder before flight caused by the fact that the aircraft temperature of the aircraft after the flight and the temperature when the engine is cold are greatly different.

According to one embodiment of the present invention, performance of the crew oxygen system can be determined through statistical relation between the oxygen standard state pressure Ps of the crew oxygen system and installation time $t_0$ of oxygen cylinder of the crew oxygen system, and through the calculation of the slope of fitting curves.

The relationship between Ps and $t_0$ meet the following formula:

$$\mathbf{P_s = \beta1 + \beta2 * t_0 + \mu} \qquad (6)$$

where, $P_s$ is the standard state pressure, $t_0$ is the installation time of oxygen cylinder of the crew oxygen system, β1 is an intercept term which relate s to flight time; β2 is a slope term which indicates the gas tightness of oxygen system; μ is a random term which indicates uncertainty between $P_s$ and $t_0$.

Mean value of $t_0$ can be expressed as following:

$$t_{o-avg} = \frac{1}{n}\sum_{l=1}^{l=n}(t_{o1} + ...t_{on}) \qquad (7)$$

where, n is the number of sampled points which are used in the calculation.

Mean value of $P_s$ can be expressed as following:

$$P_{s-avg} = \frac{1}{n}\sum_{l=1}^{l=n}(P_{s1} + ...P_{sn}) \qquad (8)$$

where, n is the number of sampled points which are used in the calculation.

β2 also can be determined by the following formula according to formulas (6)-(8):

$$\beta2 = \frac{\sum_{l=1}^{n}(t_{ol} - t_{o-avg}) * (P_{sl} - P_{s-avg})}{\sum_{l=1}^{l=n}(t_{ol} - t_{o-avg})^2} \tag{9}$$

The β2 is a negative value. The smaller the value of β2 is, the worse the air tightness of crew oxygen system is. The performance of crew oxygen system can be determined through detecting change of β2, i.e., the slope term. The performance of crew oxygen system also can be determined through making a comparison between slope terms of different aircrafts.

When performing performance detection of crew oxygen system using above slope detection method, it would be better if there is no replacement of oxygen cylinder or oxygenating in the period represented by data points which are used in the calculation.

According to one embodiment of the present invention, the deterioration of the performance of the crew oxygen system can be determined through the independent sample test to leakage rate.

Since the interval of flight leg time is short, the change of system pressure may be slight, the obtained standard state pressure fluctuates greatly sometimes due to the influence by the fitting accuracy of external temperature and detection accuracy of the pressure sensor. For reducing the influence by the accuracy of external temperature and accuracy of the pressure sensor, one embodiment of the present invention does not use the leg leakage rate, but uses two points which are more than 24-hour apart to compare the pressure at those two points, that is, adopts the 24-hour interval leakage rate $P_{L24}$. Certainly, other intervals also can be adopted, such as an interval which is greater than 12-hour or 36-hour. Meanwhile, for removing bad data point effect caused by sampling, $P_{L24}$ may be 3 days rolling average which means the average value is calculated from all of $P_{L24}$ in 3 days. The person skilled in the art can understand that 3 days is only an example, other days, such 2-4 days also can be used based on special data condition.

According to one embodiment of the present invention, the 24-hour interval 3 days rolling average leakage rate $P_{L-avg24}$ ,which indicates performance of crew oxygen system, can be calculated by the following formula:

$$P_{L-avg24} = \frac{1}{n}\sum_{l=1}^{l=n}(P_{L24\_1} + ... P_{L24\_n}) \tag{10}$$

where, n is the number of data points in 3 days.

According to one embodiment of the present invention, when it is required to know if performance of crew oxygen system changes in a certain period, the data in that period can be selected as a set of samples; meanwhile, another set of data of a aircraft of the same type can be selected as another set of samples. It is determined if the two sets of data are significantly different, through making a comparison between respective $P_{L-avg24}$ of two sets of samples, according to the statistical probability, so that the period and degree of deterioration of performance of crew oxygen system can be determined.

According to one embodiment of the present invention, respective $P_{L-avg24}$ of two sets of data and variance of $P_{L-avg24}$ are calculated firstly. Assume $S1^2$ is the variance of the first set of PL-avg24 (including n data), $S2^2$ is the variance of the second set of $P_{L-avg24}$ (including m data). Since $S1^2/S2^2$ should follow F (n-1,m-1) distribution, the value of F can be determined by searching the F distribution table. It can be determined if the difference between two sets of data is significant according to the value of F. If the probability that the two sets of data belong to the same distribution is less than 2.5%, it can be determined that the difference of two sets of data is significant.

It can be determined if the difference between two sets of data is significant through other independent sample T test. If the difference is significant, it can be determined there is significant change on performance of crew oxygen system. Given it is determined there occurs significant change on performance of crew oxygen system, it is easy to determine which set of data indicates that the performance of crew oxygen system deteriorate according to the average value of leakage rate.

The independent sample test for average leakage rate either uses data at different time of the same aircraft, or uses data of a different aircraft of the same type. Therefore, this method is flexible. Moreover, this detection manner is not limited by replacement of oxygen cylinder and oxygenation, and can be used to determine if significant change occurred on performance of crew oxygen system between before and after replacement of oxygen cylinder and oxygenating.

Hereinafter, how to determine if significant change occurs to the performance of crew oxygen system using the method of the present invention is described through some embodiments.

Fig. 9 is a schematic illustrating the relationship between standard state pressure of oxygen in the oxygen cylinder of the crew oxygen system and measuring time according to one embodiment of the present invention. The curve shown in fig. 9 indicates the standard state pressure of actual sampling and transforming, straight line indicates regression line according to the standard state pressure of oxygen and measuring time. It can be found using the formula (9) of slope detection method that leakage rate of crew oxygen system is large, slope is -0.024929 which is much lower than a normal slope -0.015. This indicates performance of crew oxygen system deteriorates and has entered deterioration period.

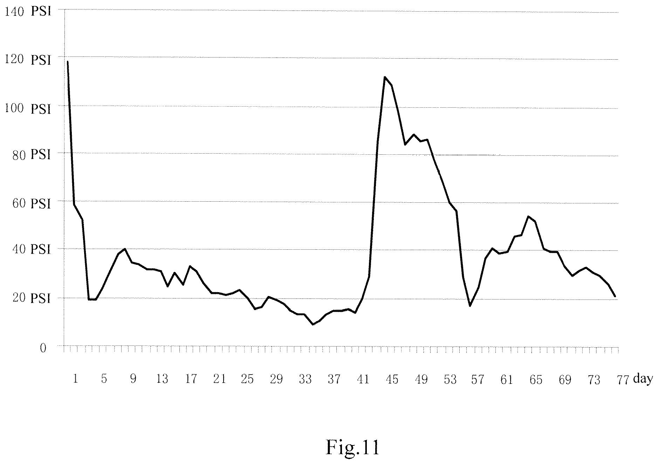

Fig. 10 is a schematic illustrating the relationship between standard state pressure of oxygen in the oxygen cylinder of the crew oxygen system and measuring time according to one embodiment of the present invention. Fig. 10 shows a process of replacement of oxygen cylinder of crew oxygen system. The dots shown in fig. 10 indicate the standard state pressure representing actual sampling and transforming. Fig. 11 is a schematic illustrating the relationship between a 24-hour 3-days rolling average leakage rate and measuring time of oxygen in the oxygen cylinder of the crew oxygen system according to the embodiment shown in Fig. 10. Two sets of data obtained respectively before and after replacement of oxygen cylinder serve as two samples, and independent sample T test is used to determine if the two samples are identical. The calculation results indicate the probability that two sets of data obtained respectively before and after replacement of oxygen cylinder are identical is zero. The performance of crew oxygen system degrades, and the average leakage rate doubles. The performance of crew oxygen system has entered deterioration period.

It can be seen from Figs. 9-11, the method described in the present invention can determine if performance of crew oxygen system degrades and enters deterioration period or failure period of crew oxygen system, through processing and analyzing oxygen pressure data of crew oxygen system and temperature data obtained from crew oxygen messages, and through calculation of slope or independent sample T test and like.

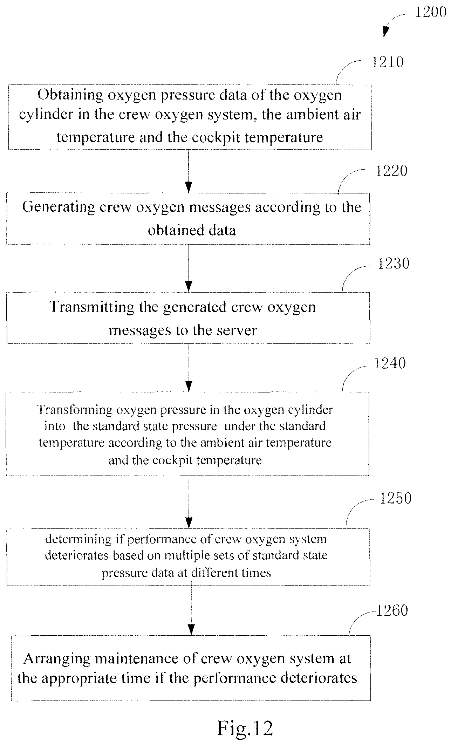

Fig. 12 is a flow chart illustrating a method for maintaining the aircraft crew oxygen system according to one embodiment of the present invention. In the method 1200 for maintaining the aircraft crew oxygen system shown in fig. 12, at step 1210, oxygen pressure data of the oxygen cylinder in the crew oxygen system, the ambient air temperature and the cockpit temperature are obtained. At step 1220, oxygen messages are generated from obtained oxygen pressure data of the oxygen cylinder in the crew oxygen system, the ambient air temperature and the cockpit temperature. At step 1230, the generated crew oxygen messages are transmitted to the server. At step 1240, the crew oxygen messages are processed by the server to obtain standard state pressure of oxygen cylinder of the crew oxygen system under the standardized temperature. At step 1250, it can be determined if performance of crew oxygen system deteriorates based on multiple sets of standard state pressure data at different times. At step 1260, if performance of crew oxygen system deteriorates, maintenance of crew oxygen system at the appropriate time is arranged.

The present invention need not manual recording and can save human's labor. Moreover, the present invention can determine performance of oxygen system onboard based on standard state pressure of oxygen and oxygen leakage rate obtained from oxygen messages, and thus can perform maintenance before the oxygen system onboard enters failure period, can speed up the fault diagnosis and reduce troubleshooting time, so that service time of oxygen system onboard can be extended and operating costs of airline can be reduced, meanwhile also can make the oxygen system onboard free from passengers' safety issue caused by sudden massive leakage, and can enhance operating safety of aircraft. The invention can predict the remaining service time of the oxygen system onboard based on the leakage rate, so that the service time can be extended obviously and maintenance cost of aircraft can be reduced.

The above embodiments of the invention have been disclosed for illustrative purposes and the invention is not to be limited to the particular forms or methods disclosed. Those skilled in the art will appreciate that various modifications, additions and substitutions are possible. Therefore, the invention is to cover all modifications, equivalents and alternatives falling within the scope of the appended claims.

**Claims**

1. A method for detecting the performance of a crew oxygen system (100), comprising:

   obtaining an oxygen pressure in an oxygen cylinder (101) of the crew oxygen system, a temperature outside an airplane and a cockpit temperature,
   generating a crew oxygen message from the obtained oxygen pressure in the oxygen cylinder (101), the temperature outside the airplane and the cockpit temperature;
   receiving the crew oxygen message and determining an oxygen pressure in the oxygen cylinder (101) under standard temperature; and
   determining the performance of the crew oxygen system.

2. The method according to claim 1, further comprising:

   obtaining an oxygen pressure in the oxygen cylinder (101) under a standard temperature before taking-off; and
   obtaining an oxygen pressure in the oxygen cylinder (101) under the standard temperature after landing.

3. The method according to claim 2, further comprising:
   determining the performance of the crew oxygen system (100) deteriorates, if a difference between pressures in the oxygen cylinder (101) under the standard temperature before taking-off and after landing is greater than 100 PSI.

4. The method according to claim 2, further comprising:
   determining performance of the crew oxygen system (100) deteriorates, if a leakage rate of the oxygen cylinder (101) from taking-off to landing is greater than 48 PSI/day.

5. The method according to claim 1, further comprising:
   determining a slope of a fitting curve through statistical relation between a pressure $P_s$ in the oxygen cylinder (101) under the standard temperature and an installation time $t_o$ of the oxygen cylinder (101).

6. The method according to claim 5, further comprising:
   determining the slope $\beta 2$ of the fitting curve according to the following formula:

$$\beta 2 = \frac{\sum_{I=1}^{n} (t_{oI} - t_{o-avg}) * (P_{sI} - P_{s-avg})}{\sum_{I=1}^{I=n} (t_{oI} - t_{o-avg})^2}$$

   wherein $t_{o-avg}$ is an average value of $t_o$, $P_{s-avg}$ is an average value of $P_s$, n is the number of sampling points.

7. The method according to claim 1, further comprising:

   calculating a set of rolling average leakage rates in a certain period;
   making a comparison between the set of rolling average leakage rates and another set of rolling average leakage rates which serves as a reference; and
   determining if significant change occurs.

8. The method according to claim 7, further comprising:

   calculating a variance of the set of rolling average leakage rates, and a variance of another set of rolling average leakage rates which serves as a reference; and
   determining if significant change occurs according to a F distribution which is followed by a ratio of the variance of the set of rolling average leakage rates and the variance of another set of rolling average leakage rates which serves as a reference.

9. The method according to claim 7, wherein the period is longer than 24 hours.

10. The method according to claim 7, wherein the rolling average leakage rate is a rolling average leakage rate in 2-4 days.

11. The method according to claim 1, further comprising:
    determining an oxygen temperature in the oxygen cylinder (101) according to the temperature outside the airplane and the cockpit temperature.

12. The method according to claim 11, wherein
    the oxygen temperature in the oxygen cylinder (101) is determined according to the following formula:

$$T = \frac{k_1 Tat + k_2 Tc}{2}$$

wherein Tat is the temperature outside the airplane, Tc is the cockpit temperature, $k_1$ and $k_2$ are adjustment parameters and $k_1 + k_2 = 2$.

13. The method according to claim 12, wherein $k_1$ is greater than $k_2$.

14. The method according to claim 12, wherein $k_1 = k_2 = 1$.

15. The method according to claim 1, wherein
the step of obtaining the oxygen pressure in the oxygen cylinder (101) of the crew oxygen system (100), the temperature outside the airplane and the cockpit temperature comprises:
obtaining the oxygen pressure in the oxygen cylinder (101) of the crew oxygen system (100), the temperature outside the airplane and the cockpit temperature at a first time before taking-off.

16. The method according to claim 15, wherein the first time is 1 minute before taking-off.

17. The method according to claim 1, wherein
the step of obtaining an oxygen pressure in the oxygen cylinder (101) of the crew oxygen system (100), a temperature outside an airplane and a cockpit temperature comprises:
obtaining the oxygen pressure in the oxygen cylinder (101) of the crew oxygen system (100), the temperature outside the airplane and the cockpit temperature at the time of 1 minute before taking-off, at the time of 30 seconds before taking-off and at the time of taking-off.

18. The method according to claim 1, wherein
the step of obtaining an oxygen pressure in the oxygen cylinder (101) of the crew oxygen system (100), a temperature outside an airplane and a cockpit temperature comprises:
obtaining the oxygen pressure in the oxygen cylinder (101) of the crew oxygen system (100), the temperature outside the airplane and the cockpit temperature at a second time after landing.

19. The method according to claim 1, wherein
the step of obtaining an oxygen pressure of an oxygen cylinder (101) of the crew oxygen system (100), a temperature outside an airplane and a cockpit temperature comprises:
obtaining the oxygen pressure of the oxygen cylinder (101) of the crew oxygen system (100), the temperature outside the airplane and the cockpit temperature at a second time after landing, 30 seconds after the second time, and 60 seconds after the second time.

20. The method according to claim 19, wherein the second time is 1 hour after landing.

21. The method according to claim 19, further comprising
obtaining the oxygen pressure in the oxygen cylinder (101) of the crew oxygen system (100), the temperature outside the airplane and the cockpit temperature before re-taking-off, if the aircraft takes off again within 1 hour after landing.

22. A system for detecting the performance of a crew oxygen system (100), comprising:

   a crew oxygen pressure data obtaining device (401),
   a crew oxygen message generating device (402) configured to generate a crew oxygen message according to the obtained oxygen pressure in the oxygen cylinder (101) obtained by the crew oxygen pressure data obtaining device (401), a temperature outside an airplane and a cockpit temperature, wherein the crew oxygen messages are transmitted through a crew oxygen messages transmitting device (403); and
   a crew oxygen pressure data processing device (404) configured to receive the crew oxygen messages, determine an oxygen pressure of the oxygen cylinder (101) under standard temperature, and thereby determine the performance of the crew oxygen system (100).

23. The system according to claim 22, wherein the crew oxygen pressure data obtaining device (401) comprises a pressure sensor (230) installed on a hyperbaric section of the crew oxygen system (100).

24. The system according to claim 22, wherein the crew oxygen messages generating device (402) is an aircraft data system or is a part thereof.

25. The system according to claim 24, wherein the crew oxygen messages generating device (402) is ACMS of Airbus or AHM of Boeing, or is a part thereof.

26. The system according to claim 22, wherein the crew oxygen pressure data processing device (404) determines the performance of the crew oxygen system (100) deteriorates if it determines a difference of pressures in the oxygen cylinder (101) under the standard temperature before taking-off and after landing is greater than 100 PSI.

27. The system according to claim 22, wherein the crew oxygen pressure data processing device (404) determines the performance of the crew oxygen system (100) deteriorates if it determines a difference of leakage rates of the oxygen cylinder (101) before taking-off and after landing is greater than 48 PSI/day.

28. The system according to claim 22, wherein the crew oxygen pressure data processing device (404) determines a slope of a fitting curve through statistical relation between a pressure $P_s$ in the oxygen cylinder (101) under the standard temperature and an installation time $t_o$ of the oxygen cylinder (101).

29. The system according to claim 28, wherein the slope $\beta2$ of the fitting curve is determined according to the following formula:

$$\beta2 = \frac{\sum_{l=1}^{n}(t_{ol} - t_{o-avg}) * (P_{sl} - P_{s-avg})}{\sum_{l=1}^{l=n}(t_{ol} - t_{o-avg})^2}$$

wherein $t_{o-avg}$ is an average value of $t_o$ , $P_{s-avg}$ is an average value of $P_s$, n is the number of sampling points.

30. The system according to claim 22, wherein the crew oxygen pressure data processing device (404) calculates a set of rolling average leakage rates in a certain period, and makes a comparison between the set of rolling average leakage rates and another set of rolling average leakage rates which serves as a reference, so as to determine if significant change occurs.

31. The system according to claim 30, wherein the crew oxygen pressure data processing device (404) calculates a variance of the set of rolling average leakage rates, and a variance of another set of rolling average leakage rates which serves as a reference; and determines if obvious change occurs according to a F distribution which is followed by a radio of the variance of the set of rolling average leakage rates and the variance of another set of rolling average leakage rates which serves as a reference.

32. The system according to claim 30, wherein the period is longer than 24 hours.

33. The system according to claim 30, wherein the rolling average leakage rate is a rolling average leakage rate in 2-4 days.

34. The system according to claim 22, wherein:

the crew oxygen pressure data obtaining device (401) comprises a pressure sensor (230) configured to measure the oxygen pressure in the oxygen cylinder (101) of the crew oxygen system (100);
the crew oxygen message generating device (402) comprises a DMU of AIDS of ACMS or a part thereof configured to obtain the oxygen pressure in the oxygen cylinder (101) of the crew oxygen system (100), the temperature outside the airplane and the cockpit temperature, and generate crew oxygen messages, wherein the crew oxygen messages are transmitted through the ACARS; and
the crew oxygen pressure data processing device (404) comprises a server configured to receive the crew oxygen messages from the ACARS, determine the oxygen pressure in the oxygen cylinder (101) under standard temperature, and determine the performance of the crew oxygen system (100) accordingly:

35. The method according to claim 1, further comprising:

determining whether the performance of the crew oxygen system (100) deteriorates; and

arranging maintenance for the crew oxygen system in response to the deterioration of the crew oxygen system (100).

**Patentansprüche**

1. Verfahren zum Erfassen der Leistungsstärke eines Crew-Sauerstoffsystems (100), umfassend:

   Beziehen eines Sauerstoffdrucks in einem Sauerstoffzylinder (101) des Crew-Sauerstoffsystems, einer Temperatur außerhalb eines Flugzeugs und einer Cockpittemperatur,
   Erzeugen einer Crew-Sauerstoffnachricht aus dem bezogenen Sauerstoffdruck in dem Sauerstoffzylinder (101), der Temperatur außerhalb des Flugzeugs und der Cockpittemperatur;
   Empfangen der Crew-Sauerstoffnachricht und Bestimmen eines Sauerstoffdrucks in dem Sauerstoffzylinder (101) bei Standardtemperatur; und
   Bestimmen der Leistungsstärke des Crew-Sauerstoffsystems.

2. Verfahren gemäß Anspruch 1, weiterhin umfassend:

   Beziehen eines Sauerstoffdrucks in dem Sauerstoffzylinder (101) bei Standardtemperatur vor dem Abheben; und
   Beziehen eines Sauerstoffdrucks in dem Sauerstoffzylinder (101) bei Standardtemperatur nach dem Landen.

3. Verfahren gemäß Anspruch 2, weiterhin umfassend:
   Bestimmen, dass die Leistungsstärke des Crew-Sauerstoffsystems (101) nachlässt, wenn eine Differenz zwischen Drücken in dem Sauerstoffzylinder (101) bei der Standardtemperatur vor dem Abheben und nach dem Landen größer ist als 100 PSI.

4. Verfahren gemäß Anspruch 2, weiterhin umfassend:
   Bestimmen, dass die Leistungsstärke des Crew-Sauerstoffsystems (101) nachlässt, wenn eine Leckrate des Sauerstoffzylinders (101) vom Abheben bis zum Landen größer ist als 48 PSI/Tag.

5. Verfahren gemäß Anspruch 1, weiterhin umfassend:
   Bestimmen einer Steigung einer Anpasskurve durch einen statistischen Zusammenhang zwischen einem Druck $P_s$ in dem Sauerstoffzylinder (101) bei der Standardtemperatur und einer Installationszeit $t_0$ des Sauerstoffzylinders (101).

6. Verfahren gemäß Anspruch 5, weiterhin umfassend:
   Bestimmen der Steigung $\beta2$ der Anpasskurve gemäß der folgenden Formel:

$$\beta2 = \frac{\sum_{I=1}^{n}(t_{oI} - t_{o-avg}) * (P_{sI} - P_{s-avg})}{\sum_{I=1}^{I=n}(t_{oI} - t_{o-avg})^2}$$

wobei $t_{o-avg}$ ein Mittelwert von $t_0$ ist, $P_{s-avg}$ ein Mittelwert von $P_s$ ist, n die Anzahl von Probepunkten ist.

7. Verfahren gemäß Anspruch 1, weiterhin umfassend:

   Berechnen eines Satzes von Gleitender-Mittelwert-Leckage-Raten in einem bestimmen Zeitraum;
   Vergleichen des Satzes von Gleitender-Mittelwert-Leckage-Raten mit einem anderen Satz Gleitender-Mittelwert-Leckage-Raten, welcher als Referenz dient; und
   Bestimmen, ob eine nennenswerte Änderung auftritt.

8. Verfahren gemäß Anspruch 7, weiterhin umfassend:

   Berechnen einer Varianz des Satzes von Gleitender-Mittelwert-Leckage-Raten und einer Varianz eines anderen Satzes von Gleitender-Mittelwert-Leckage-Raten, welcher als Referenz dient;
Bestimmen, ob eine nennenswerte Änderung auftritt gemäß einer F-Verteilung, welcher ein Verhältnis der Varianz des Satzes von Gleitender-Mittelwert-Leckage-Raten und der Varianz eines anderen Satzes Gleitender-Mittelwert-Leckage-Raten, welche als eine Referenz dient, folgt.

9. Verfahren gemäß Anspruch 7, wobei der Zeitraum größer als 24 Stunden ist.

10. Verfahren gemäß Anspruch 7, wobei die Gleitender-Mittelwert-Leckage-Rate eine Gleitender-Mittelwert-Leckage-Rate in 2 bis 4 Tagen ist.

11. Verfahren gemäß Anspruch 1, weiterhin umfassend:
Bestimmen einer Sauerstofftemperatur in dem Sauerstoffzylinder (101) gemäß der Temperatur außerhalb des Flugzeugs und der Cockpittemperatur.

12. Verfahren gemäß Anspruch 11, wobei
die Sauerstofftemperatur in dem Sauerstoffzylinder (101) gemäß der folgenden Formel bestimmt wird:

$$T = \frac{k_1 Tat + k_2 Tc}{2}$$

wobei Tat die Temperatur außerhalb des Flugzeugs ist, Tc die Cockpittemperatur ist, $k_1$ und $k_2$ Anpassungsparameter sind und $k_1 + k_2 = 2$.

13. Verfahren gemäß Anspruch 12, wobei $k_1$ größer ist als $k_2$.

14. Verfahren gemäß Anspruch 12, wobei $k_1 = k_2 = 1$.

15. Verfahren gemäß Anspruch 1, wobei
der Schritt des Beziehens des Sauerstoffdrucks in dem Sauerstoffzylinder (101) des Crew-Sauerstoffsystems (100), der Temperatur außerhalb des Flugzeugs und der Cockpittemperatur umfasst:
Beziehen des Sauerstoffdrucks in dem Sauerstoffzylinder (101) des Crew-Sauerstoffsystems (100), der Temperatur außerhalb des Flugzeugs und der Cockpittemperatur zu einer ersten Zeit vor dem Abheben.

16. Verfahren gemäß Anspruch 15, wobei die erste Zeit 1 Minute vor dem Abheben ist.

17. Verfahren gemäß Anspruch 1, wobei
der Schritt des Beziehens des Sauerstoffdrucks in dem Sauerstoffzylinder (101) des Crew-Sauerstoffsystems (100), der Temperatur außerhalb des Flugzeugs und der Cockpittemperatur umfasst:
Beziehen des Sauerstoffdrucks in dem Sauerstoffzylinder (101) des Crew-Sauerstoffsystems (100), der Temperatur außerhalb des Flugzeugs und der Cockpittemperatur zu der Zeit von 1 Minute vor dem Abflug, zu der Zeit von 30 Sekunden vor dem Abflug und zur Zeit des Abflugs.

18. Verfahren gemäß Anspruch 1, wobei
der Schritt des Beziehens des Sauerstoffdrucks in dem Sauerstoffzylinder (101) des Crew-Sauerstoffsystems (100), der Temperatur außerhalb des Flugzeugs und der Cockpittemperatur umfasst:
Beziehen des Sauerstoffdrucks in dem Sauerstoffzylinder (101) des Crew-Sauerstoffsystems (100), der Temperatur außerhalb des Flugzeugs und der Cockpittemperatur zu einer zweiten Zeit nach dem Landen.

19. Verfahren gemäß Anspruch 1, wobei
der Schritt des Beziehens des Sauerstoffdrucks eines Sauerstoffzylinders (101) des Crew-Sauerstoffsystems (100), der Temperatur außerhalb des Flugzeugs und der Cockpittemperatur umfasst:
Beziehen des Sauerstoffdrucks des Sauerstoffzylinders (101) des Crew-Sauerstoffsystems (100), der Temperatur außerhalb des Flugzeugs und der Cockpittemperatur zu einer zweiten Zeit nach dem Landen, 30 Sekunden nach der zweiten Zeit, und 60 Sekunden nach der zweiten Zeit.

20. Verfahren gemäß Anspruch 19, wobei die zweite Zeit 1 Stunde nach dem Landen ist.

21. Verfahren gemäß Anspruch 19, weiterhin umfassend:
Beziehen des Sauerstoffdrucks in dem Sauerstoffzylinder (101) des Crew-Sauerstoffsystems (100), der Temperatur außerhalb des Flugzeugs und der Cockpittemperatur vor einem erneuten Abheben, wenn das Flugzeug innerhalb 1 Stunde nach dem Landen wieder abhebt.

22. System zum Erfassen einer Leistungsstärke eines Crew-Sauerstoffsystems (100), umfassend:

ein Crew-Sauerstoffdruckdatenbezugsgerät (401),
ein Crew-Sauerstoffnachrichterzeugungsgerät (402), welches dazu konfiguriert ist, eine Crew-Sauerstoffnachricht gemäß dem bezogenen Sauerstoffdruck in dem Sauerstoffzylinder (101), welcher durch das Crew-Sauerstoffdruckdatenbezugsgerät (401) bezogen wurde, einer Temperatur außerhalb des Flugzeugs und einer Cockpittemperatur zu erzeugen, wobei die Crew-Sauerstoffnachrichten durch ein Crew-Sauerstoffnachrichtenübermittlungsgerät (403) übermittelt werden; und
ein Crew-Sauerstoffdruckdatenverarbeitungsgerät (404), das dazu konfiguriert ist, die Crew-Sauerstoffnachrichten zu empfangen, einen Sauerstoffdruck des Sauerstoffzylinders (101) bei Standardtemperatur zu bestimmen, und damit die Leistungsstärke des Crew-Sauerstoffsystems (101) zu bestimmen.

23. System gemäß Anspruch 22, wobei das Crew-Sauerstoffdruckdatenbezugsgerät (401) einen Drucksensor (230) umfasst, welcher auf einer hyperbaren Sektion des Crew-Sauerstoffsystems (100) installiert ist.

24. System gemäß Anspruch 22, wobei das Crew-Sauerstoffnachrichtenerzeugungsgerät (402) ein Flugzeugdatensystem oder ein Teil davon ist.

25. System gemäß Anspruch 24, wobei das Crew-Sauerstoffnachrichtenerzeugungsgerät (402) ACMS von Airbus oder AHM von Boeing oder ein Teil davon ist.

26. System gemäß Anspruch 22, wobei das Crew-Sauerstoffdruckdatenverarbeitungsgerät (404) bestimmt, dass die Leistungsstärke des Crew-Sauerstoffsystems (100) abnimmt, wenn es feststellt, dass eine Differenz zwischen den Drücken in dem Sauerstoffzylinder (101) bei der Standardtemperatur vor dem Abheben und nach dem Landen ist größer ist als 100 PSI.

27. System gemäß Anspruch 22, wobei das Crew-Sauerstoffdruckdatenverarbeitungsgerät (404) bestimmt, dass die Leistungsstärke des Crew-Sauerstoffsystems (101) nachlässt, wenn es bestimmt, dass eine Differenz der Leckraten des Sauerstoffzylinders (101) vor dem Abheben und nach dem Landen größer ist als 48 PSI/Tag.

28. System gemäß Anspruch 22, wobei das Crew-Sauerstoffdruckdatenverarbeitungsgerät (404) eine Steigung einer Anpasskurve durch einen statistischen Zusammenhang zwischen einem Druck $P_s$ in dem Sauerstoffzylinder (101) bei der Standardtemperatur und einer Installationszeit $t_0$ des Sauerstoffzylinders (101) bestimmt.

29. System gemäß Anspruch 28, wobei die Steigung β2 der Anpasskurve gemäß der folgenden Formel bestimmt wird:

$$\beta2 = \frac{\sum_{I=1}^{n}(t_{oI} - t_{o-avg}) * (P_{sI} - P_{s-avg})}{\sum_{I=1}^{I=n}(t_{oI} - t_{o-avg})^2}$$

wobei $t_{o-avg}$ ein Mittelwert von $t_0$ ist, $P_{s-avg}$ ein Mittelwert von $P_s$ ist, n die Anzahl von Probepunkten ist.

30. System gemäß Anspruch 22, wobei das Crew-Sauerstoffdruckdatenverarbeitungsgerät (404) einen Satz von Gleitender-Mittelwert-Leckage-Raten in einem bestimmen Zeitraum berechnet und einen Vergleich des Satzes von Gleitender-Mittelwert-Leckage-Raten mit einem anderen Satz Gleitender-Mittelwert-Leckage-Raten, welcher als Referenz dient, durchführt um zu Bestimmen, ob eine nennenswerte Änderung auftritt.

31. System gemäß Anspruch 30, wobei das Crew-Sauerstoffdruckdatenverarbeitungsgerät (404) eine Varianz des Satzes von Gleitender-Mittelwert-Leckage-Raten und eine Varianz eines anderen Satzes von Gleitender-Mittelwert-Leckage-Raten, welcher als Referenz dient, berechnet; und bestimmt ob eine offensichtliche Änderung auftritt gemäß einer F-Verteilung, welcher ein Verhältnis der Varianz des Satzes von Gleitender-Mittelwert-Leckage-Raten und der Varianz eines anderen Satzes Gleitender-Mittelwert-Leckage-Raten, welche als eine Referenz dient, folgt.

**32.** System gemäß Anspruch 30, wobei der Zeitraum größer als 24 Stunden ist.

**33.** System gemäß Anspruch 30, wobei die Gleitender-Mittelwert-Leckage-Rate eine Gleitender-Mittelwert-Leckage-Rate in 2 bis 4 Tagen ist.

**34.** System gemäß Anspruch 22, wobei

das Crew-Sauerstoffdruckdatenbezugsgerät (401) einen Drucksensor (230) umfasst, der dazu konfiguriert ist, den Sauerstoffdruck in dem Sauerstoffzylinder (101) des Crew-Sauerstoffsystems (100) zu messen;
das Crew-Sauerstoffnachrichtenerzeugungsgerät (402) ein DMU von AIDS oder ACMS oder einen Teil davon umfasst, welcher dazu konfiguriert ist, den Sauerstoffdruck in dem Sauerstoffzylinder (101) des Crew-Sauerstoffsystems (101), die Temperatur außerhalb des Flugzeugs und die Cockpittemperatur zu beziehen, und Crew-Sauerstoffnachrichten zu erzeugen, wobei die Crew-Sauerstoffnachrichten durch das ACARS übermittelt werden;
das Crew-Sauerstoffdruckdatenverarbeitungsgerät (404) einen Server umfasst, welcher dazu konfiguriert ist, die Crew-Sauerstoffnachrichten von dem ACARS zu empfangen, den Sauerstoffdruck in dem Sauerstoffzylinder (101) bei Standardtemperatur zu bestimmen, und die Leistungsstärke des Crew-Sauerstoffsystems (100) entsprechend zu bestimmen.

**35.** Verfahren gemäß Anspruch 1, weiterhin umfassend:

Bestimmen, ob die Leistungsstärke des Crew-Sauerstoffsystems (100) nachlässt; und
Organisieren einer Wartung für das Crew-Sauerstoffsystem in Reaktion auf das Nachlassen des Crew-Sauerstoffsystems (100).

**Revendications**

**1.** Procédé de détection de la performance d'un système d'oxygène équipage (100), comprenant :

l'obtention d'une pression de l'oxygène dans une bonbonne d'oxygène (101) du système d'oxygène équipage, d'une température à l'extérieur d'un aéronef et d'une température de la cabine,
la génération d'un message sur l'oxygène équipage à partir de la pression de l'oxygène obtenue dans la bonbonne d'oxygène (101), de la température à l'extérieur de l'aéronef et de la température de la cabine ;
la réception du message sur l'oxygène équipage et la détermination d'une pression de l'oxygène dans la bonbonne d'oxygène (101) sous température standard ; et
la détermination de la performance du système d'oxygène équipage.

**2.** Procédé selon la revendication 1, comprenant en outre :

l'obtention d'une pression de l'oxygène dans la bonbonne d'oxygène (101) sous une température standard avant le décollage ; et
l'obtention d'une pression de l'oxygène dans la bonbonne d'oxygène (101) sous la température standard après l'atterrissage.

**3.** Procédé selon la revendication 2, comprenant en outre :
la détermination que la performance du système d'oxygène équipage (100) se détériore, si une différence entre les pressions dans la bonbonne d'oxygène (101) sous la température standard avant le décollage et après l'atterrissage est supérieure à 100 lb/po$^2$.

**4.** Procédé selon la revendication 2, comprenant en outre :
la détermination que la performance du système d'oxygène équipage (100) se détériore, si un taux de fuite de la bonbonne d'oxygène (101) depuis le décollage à l'atterrissage est supérieur à 48 lb/po$^2$/jour.

**5.** Procédé selon la revendication 1, comprenant en outre :

la détermination d'une pente d'une courbe d'ajustement à travers la relation statistique entre une pression $P_s$ dans la bonbonne d'oxygène (101) sous la température standard et un temps d'installation $t_0$ de la bonbonne d'oxygène (101).

**6.** Procédé selon la revendication 5, comprenant en outre :
la détermination de la pente β2 de la courbe d'ajustement en fonction de la formule suivante :

$$\beta 2 = \frac{\sum_{l=1}^{n}\left(t_{ol} - t_{o-avg}\right) * \left(P_{sl} - P_{s-avg}\right)}{\sum_{l=1}^{l=n}\left(t_{ol} - t_{o-avg}\right)^2}$$

dans laquelle $t_{o-avg}$ est une valeur moyenne de $t_0$, $P_{s-avg}$ est une valeur moyenne de $P_s$, n est le nombre de points d'échantillonnage.

**7.** Procédé selon la revendication 1, comprenant en outre :

le calcul d'un ensemble de taux de fuite moyens au roulage sur une certaine période ;
la réalisation d'une comparaison entre l'ensemble des taux de fuite moyens au roulage et d'un autre ensemble des taux de fuite moyens au roulage qui sert de référence ; et
la détermination du fait qu'un changement significatif se produit.

**8.** Procédé selon la revendication 7, comprenant en outre :

le calcul d'une variance de l'ensemble des taux de fuite moyens au roulage, et d'une variance d'un autre ensemble des taux de fuite moyens au roulage qui sert de référence ; et
la détermination du fait qu'un changement significatif se produit en fonction d'une distribution F qui est suivie d'un rapport de la variance de l'ensemble des taux de fuite moyens au roulage et de la variance d'un autre ensemble des taux de fuite moyens au roulage qui sert de référence.

**9.** Procédé selon la revendication 7, la période étant supérieure à 24 heures.

**10.** Procédé selon la revendication 7, le taux de fuite moyen au roulage étant un taux de fuite moyen au roulage en 2 à 4 jours.

**11.** Procédé selon la revendication 1, comprenant en outre :
la détermination d'une température de l'oxygène dans la bonbonne d'oxygène (101) en fonction de la température à l'extérieur de l'aéronef et de la température de la cabine.

**12.** Procédé selon la revendication 11,
la température de l'oxygène dans la bonbonne d'oxygène (101) étant déterminée en fonction de la formule suivante :

$$T = \frac{k_1 Tat + k_2 Tc}{2}$$

Tat étant la température à l'extérieur de l'aéronef, Tc étant la température de la cabine, $k_1$ et $k_2$ étant des paramètres d'ajustement et $k_1 + k_2 = 2$.

**13.** Procédé selon la revendication 12, $k_1$ étant supérieur à $k_2$.

**14.** Procédé selon la revendication 12, $k_1 = k_2 = 1$.

**15.** Procédé selon la revendication 1,
l'étape d'obtention de la pression de l'oxygène dans la bonbonne d'oxygène (101) du système d'oxygène équipage (100), de la température à l'extérieur de l'aéronef et de la température de la cabine comprenant :
l'obtention de la pression de l'oxygène dans la bonbonne d'oxygène (101) du système d'oxygène équipage (100), de la température à l'extérieur de l'aéronef et de la température de la cabine à un premier moment avant le décollage.

**16.** Procédé selon la revendication 15, le premier moment étant d'une minute avant le décollage.

**17.** Procédé selon la revendication 1,
l'étape d'obtention d'une pression de l'oxygène dans la bonbonne d'oxygène (101) du système d'oxygène équipage (100), d'une température à l'extérieur d'un aéronef et d'une température de la cabine comprenant :
l'obtention de la pression de l'oxygène dans la bonbonne d'oxygène (101) du système d'oxygène équipage (100), de la température à l'extérieur de l'aéronef et de la température de la cabine au moment d'une minute avant le décollage, au moment de 30 secondes avant le décollage et au moment du décollage.

**18.** Procédé selon la revendication 1,
l'étape d'obtention d'une pression de l'oxygène dans la bonbonne d'oxygène (101) du système d'oxygène équipage (100), d'une température à l'extérieur d'un aéronef et d'une température de la cabine comprenant :
l'obtention de la pression de l'oxygène dans la bonbonne d'oxygène (101) du système d'oxygène équipage (100), de la température à l'extérieur de l'aéronef et de la température de la cabine à un second moment après l'atterrissage.

**19.** Procédé selon la revendication 1,
l'étape d'obtention d'une pression de l'oxygène d'une bonbonne d'oxygène (101) du système d'oxygène équipage (100), d'une température à l'extérieur d'un aéronef et d'une température de la cabine comprenant :
l'obtention de la pression de l'oxygène de la bonbonne d'oxygène (101) du système d'oxygène équipage (100), de la température à l'extérieur de l'aéronef et de la température de la cabine à un second moment après l'atterrissage, 30 secondes après le second moment, et 60 secondes après le second moment.

**20.** Procédé selon la revendication 19, le second moment étant d'une heure après l'atterrissage.

**21.** Procédé selon la revendication 19, comprenant en outre
l'obtention de la pression de l'oxygène dans la bonbonne d'oxygène (101) du système d'oxygène équipage (100), de la température à l'extérieur de l'aéronef et de la température de la cabine avant le redécollage, si l'aéronef décolle à nouveau dans l'heure suivant l'atterrissage.

**22.** Système de détection de la performance d'un système d'oxygène équipage (100), comprenant :

un dispositif d'obtention des données de pression d'oxygène équipage (401),
un dispositif de génération de message sur l'oxygène équipage (402) conçu pour générer un message sur l'oxygène équipage selon la pression de l'oxygène obtenue dans la bonbonne d'oxygène (101) obtenue par le dispositif d'obtention des données de pression d'oxygène équipage (401), d'une température à l'extérieur d'un aéronef et d'une température de la cabine, les messages sur l'oxygène équipage étant transmis à travers un dispositif de transmission de messages sur l'oxygène équipage (403) ; et
un dispositif de traitement de données de pression de l'oxygène équipage (404) conçu pour recevoir les messages sur l'oxygène équipage, déterminer une pression de l'oxygène de la bonbonne d'oxygène (101) sous la température standard, et déterminer ainsi la performance du système d'oxygène équipage (100).

**23.** Système selon la revendication 22, le dispositif d'obtention des données de pression d'oxygène équipage (401) comprenant un capteur de pression (230) installé sur une section hyperbare du système d'oxygène équipage (100).

**24.** Système selon la revendication 22, le dispositif de génération de messages sur l'oxygène équipage (402) étant un système de données d'aéronef ou étant une partie de celui-ci.

**25.** Système selon la revendication 24, le dispositif de génération de messages sur l'oxygène équipage (402) étant l'ACMS d'Airbus ou l'AHM de Boeing, ou étant une partie de celui-ci.

**26.** Système selon la revendication 22, le dispositif de traitement de données de pression de l'oxygène équipage (404) déterminant que la performance du système d'oxygène équipage (100) se détériore s'il détermine qu'une différence des pressions dans la bonbonne d'oxygène (101) sous la température standard avant le décollage et après l'atterrissage est supérieure à 100 lb/po$^2$.

**27.** Système selon la revendication 22, le dispositif de traitement de données de pression de l'oxygène équipage (404) déterminant que la performance du système d'oxygène équipage (100) se détériore s'il détermine qu'une différence entre les taux de fuite de la bonbonne d'oxygène (101) avant le décollage et après l'atterrissage est supérieure à

48 lb/po$^2$/jour.

**28.** Système selon la revendication 22, le dispositif de traitement de données de pression de l'oxygène équipage (404) déterminant une pente d'une courbe d'ajustement à travers la relation statistique entre une pression Ps dans la bonbonne d'oxygène (101) sous la température standard et un temps d'installation $t_0$ de la bonbonne d'oxygène (101).

**29.** Système selon la revendication 28, la pente β2 de la courbe d'ajustement étant déterminée en fonction de la formule suivante :

$$\beta2 = \frac{\sum_{l=1}^{n}(t_{ol} - t_{o-avg}) * (P_{sl} - P_{s-avg})}{\sum_{l=1}^{l=n}(t_{ol} - t_{o-avg})^2}$$

dans laquelle $t_{o-avg}$ est une valeur moyenne de $t_0$, $P_{s-avg}$ est une valeur moyenne de $P_s$, n est le nombre de points d'échantillonnage.

**30.** Système selon la revendication 22, le dispositif de traitement de données de pression de l'oxygène équipage (404) calculant un ensemble de taux de fuite moyens au roulage sur une certaine période, et effectuant une comparaison entre l'ensemble des taux de fuite moyens au roulage et un autre ensemble des taux de fuite moyens au roulage qui sert de référence, afin de déterminer si un changement significatif se produit.

**31.** Système selon la revendication 30, le dispositif de traitement de données de pression de l'oxygène équipage (404) calculant une variance de l'ensemble des taux de fuite moyens au roulage, et une variance d'un autre ensemble des taux de fuite moyens au roulage qui sert de référence ; et déterminant si un changement évident se produit en fonction d'une distribution F qui est suivie d'une radio de la variance de l'ensemble des taux de fuite moyens au roulage et de la variance d'un autre ensemble des taux de fuite moyens au roulage qui sert de référence.

**32.** Système selon la revendication 30, la période étant supérieure à 24 heures.

**33.** Système selon la revendication 30, le taux de fuite moyen au roulage étant un taux de fuite moyen au roulage sur 2 à 4 jours.

**34.** Système selon la revendication 22 :

le dispositif d'obtention des données de pression d'oxygène équipage (401) comprenant un capteur de pression (230) conçu pour mesurer la pression de l'oxygène dans la bonbonne d'oxygène (101) du système d'oxygène équipage (100) ;
le dispositif de génération de message sur l'oxygène équipage (402) comprenant un DMU de AIDS de ACMS ou une partie de celui-ci conçu pour obtenir la pression de l'oxygène dans la bonbonne d'oxygène (101) du système d'oxygène équipage (100), de la température à l'extérieur de l'aéronef et de la température de la cabine, et pour générer des messages sur l'oxygène équipage, les messages sur l'oxygène équipage étant transmis à travers l'ACARS ; et
le dispositif de traitement de données de pression de l'oxygène équipage (404) comprenant un serveur conçu pour recevoir les messages sur l'oxygène équipage de l'ACARS, déterminer la pression de l'oxygène dans la bonbonne d'oxygène (101) sous température standard, et déterminer la performance du système d'oxygène équipage (100) en conséquence.

**35.** Procédé selon la revendication 1, comprenant en outre :

la détermination du fait que la performance du système d'oxygène équipage (100) se détériore ; et
la mise en place de la maintenance pour le système d'oxygène équipage en réponse à la détérioration du système d'oxygène équipage (100).

Fig.1

Leading to the
oxygen mask

200

Hypobaric
Section

Hyperbaric
section

230

220

101

210

Leading to
outside the cabin

Leading to the
test port

## Fig.2

300

310

Va

320

Aircraft data
system

Oxygen
pressure

## Fig.3

400

| Aircraft |
| --- |

401
crew oxygen pressure data acquisition device

402
crew oxygen message generating device

403
crew oxygen message transmitting device (aircraft portion)

404
crew oxygen data processing device

410
crew oxygen message transmitting device (ground portion)

Fig.4

500

510

## Taking off

521

Obtaining the oxygen pressure data in the oxygen cylinder at the time of 1 minute before its taking-off

522

Obtaining the ambient air temperature and the cockpit temperature at the time of 1 minute before taking-off

530

## Storing the crew oxygen data before taking-off

540

## Landing

551

Obtaining the oxygen pressure data in the oxygen cylinder at the time of 1 hour after landing

552

Obtaining the ambient air temperature and the cockpit temperature at the time of 1 hour after landing

560

## Generating crew oxygen messages

Fig.5

Fig.6

Fig.7

800

810

Obtaining the oxygen pressure data in the oxygen
cylinder in the crew oxygen system, the ambient air
temperature and the cockpit temperature

820

Generating the crew oxygen messages
according to the obtained data

830

Transmitting the generated crew oxygen
messages to the server

840

Transforming the oxygen pressure in the oxygen
cylinder into standard state pressure under the standard
temperature according to the ambient air temperature
and the cockpit temperature

850

Obtaining multiple sets of standard state pressure
data of crew oxygen system at different time

860

Analyzing the multiple sets of standard
state pressure data at different time, and
determine if the performance of crew
oxygen system deteriorates

870

Using the multiple sets of standard state pressure data at
different time as one sample and then comparing the sample
with another sample, and determining if performance of the
crew oxygen system deteriorates

Fig.8

Fig.9

Fig.10

Fig.11

1200

1210

Obtaining oxygen pressure data of the oxygen
cylinder in the crew oxygen system, the ambient air
temperature and the cockpit temperature

1220

Generating crew oxygen messages according to the
obtained data

1230

Transmitting the generated crew oxygen
messages to the server

1240

Transforming oxygen pressure in the oxygen cylinder
into the standard state pressure under the standard
temperature according to the ambient air temperature
and the cockpit temperature

1250

determining if performance of crew oxygen system
deteriorates based on multiple sets of standard state
pressure data at different times

1260

Arranging maintenance of crew oxygen system at
the appropriate time if the performance deteriorates

Fig.12

**EP 2 537 557 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5159839 A1